# EUROPEAN PATENT SPECIFICATION

(11) **EP 2 522 919 B1**
(45) Date of publication and mention of the grant of the patent: **10.07.2019**
(21) Application number: 12161511.6
(22) Date of filing: 27.03.2012
(51) Int. Cl.: F24F 3/06, F25B 5/02, F25B 13/00, F25B 41/06, F24F 11/00

(54) **Method of controlling a multi type air conditioner**
Verfahren zum Steuern einer Mehrsystem-Klimaanlage
Procédé de commande d'un climatiseur multi-bloc

(30) Priority: 11.05.2011 KR 20110043904
(43) Date of publication of application: 14.11.2012
(73) Proprietor: LG Electronics Inc., Seoul 150-721 (KR)
(72) Inventor: Lee, Jaewan, 153-802 Seoul (KR); Lee, Sanghun, 153-802 Seoul (KR)
(74) Representative: Vossius & Partner Patentanwälte Rechtsanwälte mbB

(56) References cited:
- EP-A1- 1 371 911
- EP-A2- 1 437 556
- KR-A- 20100 069 402
- US-A- 6 126 080

## Description

The present disclosure relates to a method of controlling the multi type air conditioner.

Air conditioners include a refrigerant cycle of a compressor, a condenser, an expansion mechanism, and an evaporator to heat/cool an indoor space or purify air, thereby providing comfort indoor environment to users.

Air conditioners are classified into air conditioners in which a single indoor unit is connected to a single outdoor unit, and multi type air conditioners in which a plurality of indoor units are connected to a single outdoor unit to provide the effect of a plurality of air conditioners.

Recently, simultaneous heating/cooling air conditioners are developed, which include a distributor between an outdoor unit and indoor units to control refrigerant flow. In this case, a part of the indoor units cool an indoor space, and the rest thereof heats an indoor space.

Such a distributor may include a plurality of pipe ports. In this case, only one indoor unit is connected to one pipe port. Thus, the number of distributors should be increased to increase the number of indoor units, which increases material and installation costs for additional distributors. KR-A-2010 0069402 discloses a state of the art according to the preamble of claims 1 and 15.

The present invention provides a method of controlling a multi type air conditioner, in which a plurality of indoor units are connected to a pipe port of a distributor according to claim 1. Preferred embodiments are defined in the dependent claims.

In one embodiment, a method of controlling a multi type air conditioner including: an outdoor unit; a distributor connected to the outdoor unit and including pipe ports; and a plurality of indoor units connected to the distributor, wherein two or more of the indoor units are connected to one or more of the pipe ports to constitute an indoor unit group of each pipe port, includes: inputting an operation command to one or more of the indoor units constituting the indoor unit group; checking a reference mode of the indoor unit group; and imitating the reference mode to operate the one or more indoor units.

The details of one or more embodiments are set forth in the accompanying drawings and the description below. Other features will be apparent from the description and drawings, and from the claims.
Fig. 1 is a schematic view illustrating a multi type air conditioner according to an embodiment.
Fig. 2 is a schematic view illustrating a refrigerant cycle of a multi type air conditioner according to an embodiment.
Fig. 3 is a schematic view illustrating refrigerant flow in a whole heating operation of a multi type air conditioner according to an embodiment.
Fig. 4 is a schematic view illustrating refrigerant flow in a cooling-dominant operation of a multi type air conditioner according to an embodiment.
Fig. 5 is a schematic view illustrating refrigerant flow in a heating-dominant operation of a multi type air conditioner according to an embodiment.
Fig. 6 is a block diagram illustrating control of a multi type air conditioner according to an embodiment.
Fig. 7 is a flowchart illustrating a method of searching for a tube of a multi type air conditioner according to an embodiment.
Fig. 8 is a schematic view illustrating a display part and an input part of an outdoor unit according to an embodiment.
Fig. 9 is a schematic view illustrating a display part according to an embodiment.
Fig. 10 is a flowchart illustrating a method of controlling a multi type air conditioner according to an embodiment.

Hereinafter, exemplary embodiments of the present disclosure will be described with reference to the accompanying drawings. Regarding the reference numerals assigned to the elements in the drawings, it should be noted that the same elements will be designated by the same reference numerals, wherever possible, even though they are shown in different drawings. Also, in the description of embodiments, detailed description of well-known related structures or functions will be omitted when it is deemed that such description will cause ambiguous interpretation of the present disclosure.

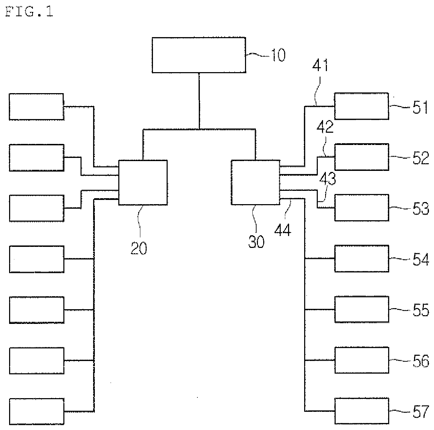

Fig. 1 is a schematic view illustrating a multi type air conditioner according to an embodiment.

Referring to Fig. 1, a multi type air conditioner according to the current embodiment includes at least one outdoor unit 10, a plurality of indoor units 51 to 57, and one or more distributors 20 and 30 connecting the outdoor unit 10 to the indoor units 51 to 57.

One outdoor unit is provided as the outdoor unit 10; two distributors are provided as the distributors 20 and 30; and seven indoor units are provided as the indoor units 51 to 57 at each of the distributors 20 and 30. However, the present disclosure is not limited to the number of indoor units, outdoor units, and distributors.

First to fourth pipe ports 41, 42, 43, and 44 may be provided to each of the distributors 20 and 30. In the current embodiment, the number of pipe ports provided to each of the distributors 20 and 30 is not limited thereto.

The first, second, and third indoor units 51, 52, and 53 are connected to the first, second, and third pipe ports 41, 42, and 43, respectively. Indoor units are connected in parallel to the fourth pipe port 44. For example, the fourth, fifth, sixth, and seventh indoor units 54, 55, 56, and 57 may be connected to the fourth pipe port 44.

Herein, the indoor units 54, 55, 56, and 57 may be connected to the fourth pipe port 44 may be referred to as grouped indoor units, or an indoor unit group.

Although a plurality of indoor units are connected to the fourth pipe port 44 according to the current embodiment, a plurality of indoor units may be connected to a plurality of pipe ports, respectively.

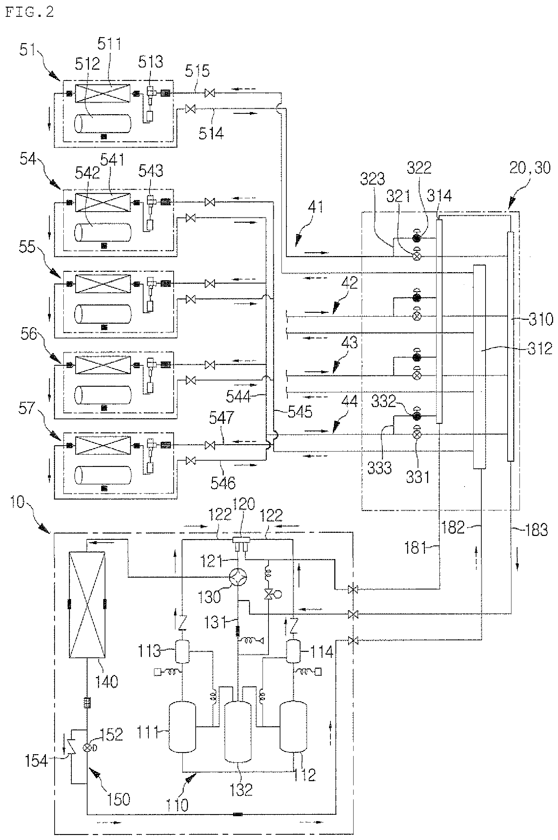

Fig. 2 is a schematic view illustrating a refrigerant cycle of a multi type air conditioner according to an embodiment.

A first indoor unit 51 and fourth to seventh indoor units 54 and 57 connected to a distributor 20 or 30 are illustrated in Fig. 2, and second and third indoor units 52 and 53 (refer to Fig. 1) are not illustrated.

Referring to Fig. 2, an outdoor unit 10 includes a compressor part 110, an outdoor heat exchanger 140, an outdoor expansion mechanism 150, and a switching valve 130.

The compressor part 110 includes one or more compressors for compressing refrigerant. Hereinafter, compressors 111 and 112 are exemplified as the compressors of the compressor part 110.

The compressors 111 and 112 may include an inverter compressor (also denoted by 111) having variable capacity, and a constant-speed compressor (also denoted by 112). The compressors 111 and 112 may be arrayed in parallel. An intake tube 131 of the compressors 111 and 112 is connected to the switching valve 130. An accumulator 132 is installed on the intake tube 131.

Discharge passages of the compressors 111 and 112 may be provided with oil separators 113 and 114 for separating oil from the refrigerant, and a discharge distributor 120 connected to the switching valve 130 and the distributors 20 and 30. Oil separated from the refrigerant by the oil separators 113 and 114 may be recovered to the compressor part 110.

The discharge distributor 120 distributes the refrigerant discharged from the compressors 111 and 112 to the switching valve 130 and the distributors 20 and 30. The discharge distributor 120 is connected to the distributors 20 and 30 through a high pressure gas tube 181. The discharge distributor 120 is connected to the switching valve 130 through a first connecting tube 121, and is connected to the oil separators 113 and 114 through second connecting tubes 122.

The outdoor heat exchanger 140 may function as a condenser in a whole cooling operation or a cooling-dominant operation, and function as an evaporator in a whole heating operation or a heating-dominant operation.

Herein, the whole cooling operation denotes that all indoor units perform a cooling operation, and the whole heating operation denotes that all indoor units perform a heating operation. The cooling-dominant operation denotes that capacity of indoor units performing a cooling operation is greater than capacity of indoor units performing a heating operation. The heating-dominant operation denotes that capacity of indoor units performing a heating operation is greater than capacity of indoor units performing a cooling operation.

The refrigerant within the outdoor heat exchanger 140 may exchange heat with outdoor air blown by an outdoor fan (not shown).

After being discharged from the outdoor heat exchanger 140, the refrigerant is not expanded by the outdoor expansion mechanism 150. Before being introduced to the outdoor heat exchanger 140, the refrigerant is expanded by the outdoor expansion mechanism 150. The outdoor expansion mechanism 150 may include an outdoor expansion valve between the outdoor heat exchanger 140 and the distributors 20 and 30, or include an outdoor expansion valve 152 and a check valve 154 with refrigerant passages connected in parallel between a refrigerant passage of the outdoor heat exchanger 140 and the distributors 20 and 30. For example, the outdoor expansion valve 152 may be an electronic expansion valve (EEV).

The switching valve 130, in the whole cooling operation or the cooling-dominant operation, allows the refrigerant compressed by the compressors 111 and 112 to flow to the outdoor heat exchanger 140, and, in the whole heating operation or the heating-dominant operation, allows the refrigerant discharged from the outdoor heat exchanger 140 to flow to the compressors 111 and 112.

The outdoor expansion mechanism 150 is connected to the distributors 20 and 30 through a liquid tube 182. The intake tube 131 is connected to the distributors 20 and 30 through a low pressure gas tube 183.

The first to third indoor units 51 to 53 may independently perform a cooling or heating operation. On the contrary, the fourth to seventh indoor units 54 to 57 may perform a cooling or heating operation together.

Each of the indoor units 51 to 57 includes: an indoor heat exchanger 511 or 541 in which the refrigerant exchanges heat with indoor air to cool or heat the indoor air; an indoor fan 512 or 542 introducing indoor air into a corresponding one of the indoor units 51 to 57 for heat exchange in the indoor heat exchanger 511 or 541, and then, discharging the indoor air from the corresponding indoor unit; and an indoor expansion mechanism 513 or 543 expanding the refrigerant flowing to the indoor heat exchanger 511 or 541. The indoor expansion mechanisms 513 and 543 may be electronic expansion valves capable of adjusting the flow rate of refrigerant. The electronic expansion valves may control the degree of opening to adjust the flow rate of refrigerant.

The distributors 20 and 30 include a low pressure gas pipe 310, a liquid pipe 312, and a high pressure gas pipe 314.

The low pressure gas pipe 310, the liquid pipe 312, and the high pressure gas pipe 314 are connected to the outdoor unit 10 through the low pressure gas tube 183, the liquid tube 182, and the high pressure gas tube 181, respectively.

The low pressure gas pipe 310, the liquid pipe 312, and the high pressure gas pipe 314 are connected to the indoor units 51 to 57 through first to fourth pipe ports 41 to 44.

Each of the first to third pipe ports 41 to 43 includes an indoor gas tube 514 and an indoor liquid tube 515. The fourth pipe port 44 includes: a common indoor gas tube 544; a common indoor liquid tube 545; a plurality of individual indoor gas tubes 546 branching from the common indoor gas tube 544 and connecting to the fourth to seventh indoor units 54 to 57, respectively; and a plurality of individual indoor liquid tubes 547 branching from the common indoor liquid tube 545 and connecting to the fourth to seventh indoor units 54 to 57, respectively.

Low pressure valves 321 and 331 are installed on the indoor gas tubes 514 and the common indoor gas tube 544 to control refrigerant flow between the low pressure gas pipe 310 and the indoor units 51 to 57. The high pressure gas pipe 314 are connected to the pipe ports 41 to 44, particularly, to the indoor gas tubes 514 and the common indoor gas tube 544 through branch tubes 323 and 333. High pressure valves 322 and 332 are disposed on the branch tubes 323 and 333 to control refrigerant flow between the high pressure gas pipe 314 and the indoor units 51 to 57.

When the indoor units 51 to 57 connected to the pipe ports 41 to 44 are in a cooling operation, the low pressure valves 321 and 331 may be opened, and the high pressure valves 322 and 332 may be closed. On the contrary, when the indoor units 51 to 57 connected to the pipe ports 41 to 44 are in a heating operation, the low pressure valves 321 and 331 may be closed, and the high pressure valves 322 and 332 may be opened.

The low pressure valves 321 and 331, and the high pressure valves 322 and 332 may be electronic expansion valves to adjust the degree of opening linearly or in a stepwise fashion.

Hereinafter, refrigerant flow of a multi type air conditioner will now be described.

A whole cooling operation will be described first, and refrigerant flow of the whole cooling operation is illustrated in Fig. 2.

Referring to Fig. 2, when the indoor units 51 to 57 are in the whole cooling operation, the low pressure valves 321 and 331 are opened, and the high pressure valves 322 and 332 are closed.

In the whole cooling operation, the refrigerant compressed by the compressors 111 and 112 sequentially pass through the switching valve 130 and the outdoor heat exchanger 140 by the discharge distributor 120, and then, flows from the outdoor unit 10 to the liquid pipe 312 of the distributors 20 and 30 through the liquid tube 182. The refrigerant arriving at the liquid pipe 312 flows to the indoor expansion mechanisms 513 and 543 of the indoor units 51 to 57, which are in the whole cooling operation, through the indoor liquid tubes 547 and 515. Then, the refrigerant is expanded by the indoor expansion mechanisms 513 and 543, and then, is evaporated by the indoor heat exchangers 511 and 541. Then, the evaporated refrigerant flows from the indoor units 51 to 57 to the low pressure gas pipe 310 of the distributors 20 and 30 through the indoor gas tubes 514 and 544. The refrigerant arriving at the low pressure gas pipe 310 are introduced to the compressors 111 and 112 of the outdoor unit 10 through the low pressure gas tube 183.

A whole heating operation will now be described.

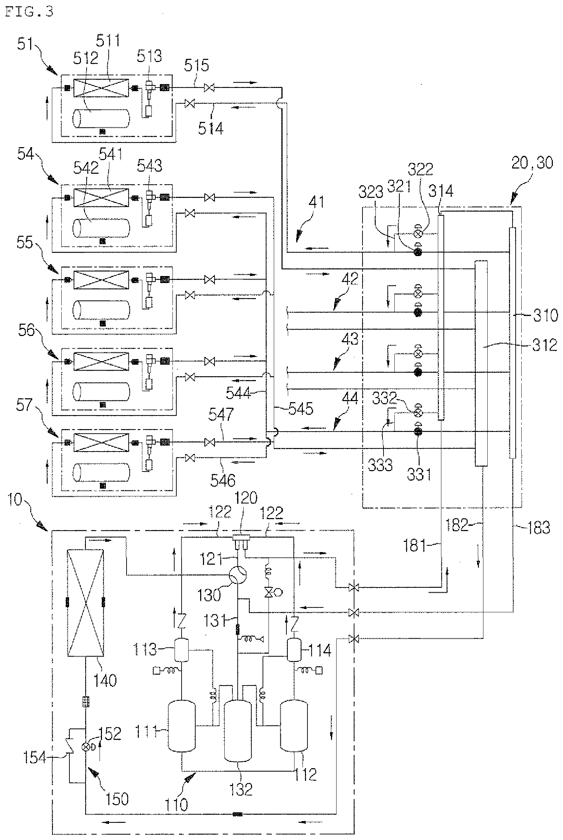

Fig. 3 is a schematic view illustrating refrigerant flow in a whole heating operation of a multi type air conditioner according to an embodiment.

Referring to Fig. 3, when the indoor units 51 to 57 are in the whole heating operation, the low pressure valves 321 and 331 are closed, and the high pressure valves 322 and 332 are opened.

In the whole heating operation, the refrigerant compressed by the compressors 111 and 112 pass through the discharge distributor 120, and then, flows from the outdoor unit 10 to the high pressure gas pipe 314 of the distributors 20 and 30 through the high pressure gas tube 181.

The refrigerant arriving at the high pressure gas pipe 314 are introduced to the indoor heat exchanger 511 and 541 of the indoor units 51 to 57 through the indoor gas tubes 514 and 544, then, is condensed by the indoor heat exchangers 511 and 541, and then, passes through the indoor expansion mechanisms 513 and 543 without expansion. Then, the refrigerant flows from the indoor units 51 to 57 to the liquid pipe 312 of the distributors 20 and 30 through the indoor liquid tubes 515 and 547. The refrigerant arriving at the liquid pipe 312 is introduced to the outdoor expansion mechanism 150 of the outdoor unit 10 through the liquid tube 182, and is expanded by the outdoor expansion mechanism 150. Then, the expanded refrigerant is evaporated by the outdoor heat exchanger 140, and is introduced to the compressors 111 and 112 through the switching valve 130.

A cooling-dominant operation will now be described.

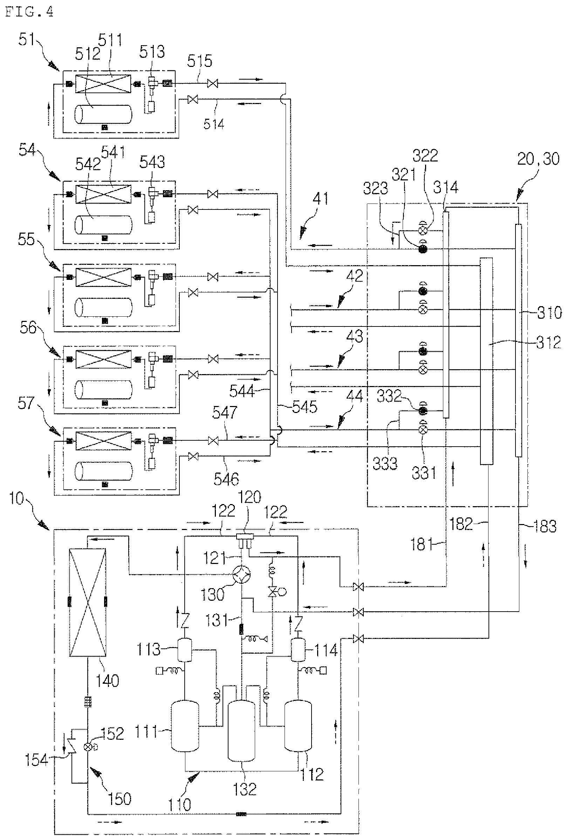

Fig. 4 is a schematic view illustrating refrigerant flow in a cooling-dominant operation of a multi type air conditioner according to an embodiment.

Referring to Fig. 4, the first indoor unit 51 is in a heating operation, and the second to seventh indoor units 52 to 57 are in a cooling operation.

In the cooling-dominant operation, the low pressure valves 321 and 331 corresponding to the second to seventh indoor units 52 to 57 in the cooling operation are opened, and the high pressure valves 322 and 332 corresponding thereto are closed. On the contrary, the low pressure valve 321 corresponding to the first indoor unit 51 in the heating operation is closed, and the high pressure valve 322 corresponding thereto is opened.

The refrigerant compressed by the compressors 111 and 112 is divided by the discharge distributor 120, and a portion of the refrigerant sequentially passes through the switching valve 130 and the outdoor heat exchanger 140, and then, flows from the outdoor unit 10 to the liquid pipe 312 of the distributors 20 and 30 through the liquid tube 182. The refrigerant arriving at the liquid pipe 312 flows to the indoor expansion mechanisms 513 and 543 of the indoor units 52 to 57, which are in the cooling operation, through the indoor liquid tubes 547 and 515. Then, the refrigerant is expanded by the indoor expansion mechanisms 513 and 543, and then, is evaporated by the indoor heat exchangers 511 and 541. Then, the evaporated refrigerant flows from the indoor units 52 to 57, which are in the cooling operation, to the low pressure gas pipe 310 of the distributors 20 and 30 through the indoor gas tubes 514 and 544, and then, is introduced to the compressors 111 and 112 of the outdoor unit 10 through the low pressure gas tube 183.

The other portion of the refrigerant divided by the discharge distributor 120 flows to the high pressure gas pipe 314 of the distributors 20 and 30 through the high pressure gas tube 181, and is introduced to the indoor heat exchanger 511 of the indoor unit 51, which is in the heating operation, through the high pressure valve 322, and is condensed. Then, the condensed refrigerant passes through the indoor expansion mechanism 513 without expansion, and then flows to the liquid pipe 312 through the indoor liquid tube 515. Then, the refrigerant is mixed with the refrigerant flowing from the outdoor unit 10 to the liquid pipe 312 through the liquid tube 182.

Accordingly, the indoor heat exchangers 511 and 541 of the indoor units 52 to 57 in the cooling operation function as evaporators to cool indoor spaces, and the indoor heat exchanger 511 of the indoor unit 51 in the cooling operation functions as a condenser to heat an indoor space.

A heating-dominant operation will now be described.

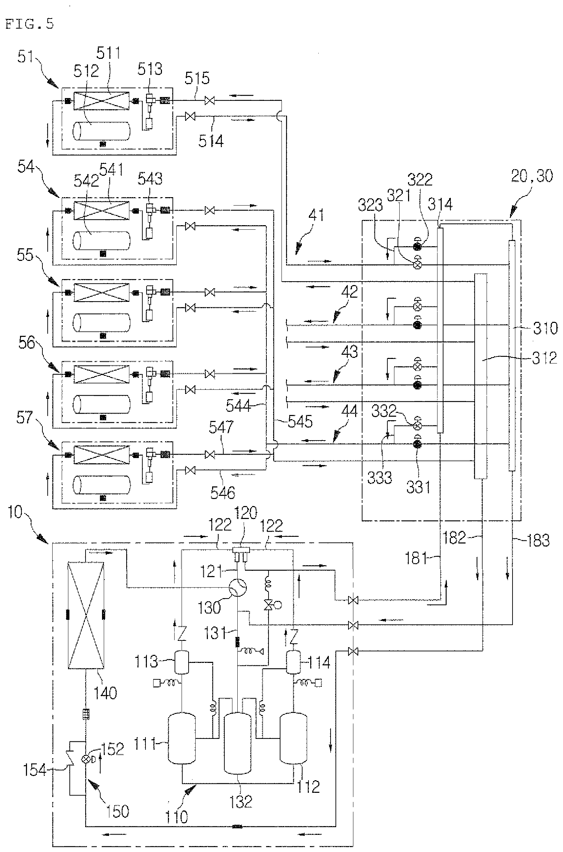

Fig. 5 is a schematic view illustrating refrigerant flow in a heating-dominant operation of a multi type air conditioner according to an embodiment.

Referring to Fig. 5, the first indoor unit 51 is in a cooling operation, and the second to seventh indoor units 52 to 57 are in a heating operation.

In the heating-dominant operation, the low pressure valves 321 and 331 corresponding to the second to seventh indoor units 52 to 57 in the heating operation are closed, and the high pressure valves 322 and 332 corresponding thereto are opened. On the contrary, the low pressure valve 321 corresponding to the first indoor unit 51 in the cooling operation is opened, and the high pressure valve 322 corresponding thereto is closed.

The refrigerant compressed by the compressors 111 and 112 flows from the outdoor unit 10 to the high pressure gas pipe 314 of the distributors 20 and 30 through the high pressure gas tube 181, and is condensed by the indoor heat exchangers 511 and 541 of the indoor units 52 to 57 in the heating operation. Then, the condensed refrigerant passes through the indoor expansion mechanisms 513 and 543 without expansion, and flows from the indoor units 52 to 57 to the liquid pipe 312 of the distributors 20 and 30 through the indoor liquid tubes 515 and 547.

A portion of the refrigerant flowing to the liquid pipe 312 flows to the indoor expansion mechanism 513 through the indoor liquid tube 515 connected to the indoor unit 51 in the cooling mode, and is expanded by the indoor expansion mechanism 513. The expanded refrigerant is evaporated by the indoor heat exchanger 511 of the indoor unit 51 in the cooling operation, then, flows to the low pressure gas pipe 310 through the indoor gas tube 514, and then, is introduced to the compressors 111 and 112 through the low pressure gas tube 183.

The rest of the refrigerant flowing to the liquid pipe 312 is introduced to the outdoor expansion mechanism 150 of the outdoor unit 10 through the liquid tube 182, and is expanded. Then, the refrigerant is evaporated by the outdoor heat exchanger 140, and is introduced to the compressors 111 and 112 through the switching valve 130.

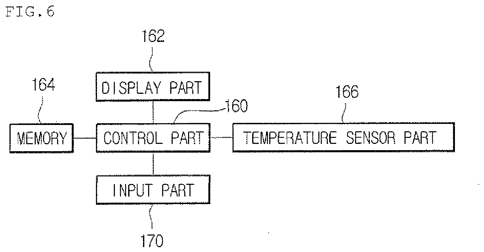

Fig. 6 is a block diagram illustrating control of a multi type air conditioner according to an embodiment.

Referring to Fig. 6, the multi type air conditioner may include a control part 160, a display part 162 for displaying information, a memory 164 for storing information, a temperature sensor part 166 for sensing temperature, and an input part 170 for inputting a command.

The control part 160 may include an indoor control part installed on the indoor units 51 to 57, an outdoor control part installed on the outdoor unit 10, and a distributor control part installed on the distributors 20 and 30. The control part 160 may include only a single control part installed on one of the outdoor unit 10 and the distributors 20 and 30. In the following description, the control part 160 includes an outdoor control part installed on the outdoor unit 10, and a distributor control part installed on the distributors 20 and 30.

For example, the display part 162 may be provided to the outdoor unit 10. At least, the display part 162 may display information about the indoor units 51 to 57 connected to the pipe ports 41 to 44 of the distributors 20 and 30.

The input part 170 may include a switch manipulated to check information about the indoor units 51 to 57 connected to the pipe ports 41 to 44 of the distributors 20 and 30. The input part 170 may be provided to the outdoor unit 10, or the distributor 20 or 30.

For example, the temperature sensor part 166 may sense temperature of the indoor gas tubes 514 and the common indoor gas tube 544 of the pipe ports 41 to 44. That is, the temperature sensor part 166 may be provided in plurality to correspond to the number of the pipe ports 41 to 44.

At least, the memory 164 may store temperature sensed by the temperature sensor part 166, and information about the indoor units 51 to 57 connected to the pipe ports 41 to 44 of the distributors 20 and 30. The memory 164 may be provided to the outdoor unit 10, or the distributor 20 or 30.

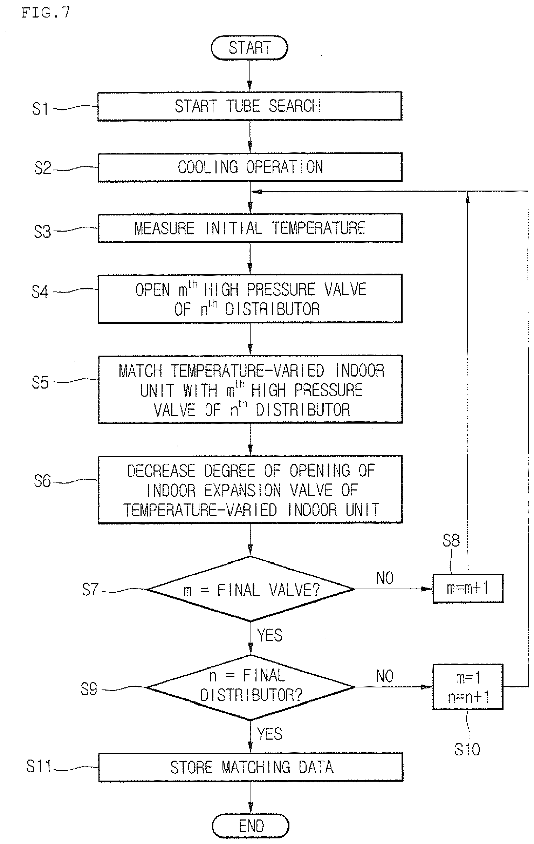

Fig. 7 is a flowchart illustrating a method of searching for a tube of a multi type air conditioner according to an embodiment.

Referring to Figs. 1, 2, 6 and 7, in operation S1, the multi type air conditioner starts to perform a tube search process when the multi type air conditioner is driven first after installation, when the tube search process is requested by selecting a predetermined button provided to one of the outdoor unit 10, the distributors 20 and 30, and the indoor units 51 to 57, or when there is no matching data of the pipe ports 41 to 44 and the indoor units 51 to 57.

Then, in operation s2, the control part 160 transmits a tube search start command to the indoor units 51 to 57 and the distributors 20 and 30 such that all of the indoor units 51 to 57 perform a cooling operation. At this point, the low pressure valves 321 and 331 of the distributors 20 and 30 are opened all, and the high pressure valves 322 and 332 are closed all. In addition, the indoor expansion mechanisms 513 and 543 of the indoor units 51 to 57 are in a full open state (the degree of opening of 100).

When all of the indoor units 51 to 57 perform the cooling operation, the temperature sensor parts 166 sense temperature of the indoor gas tubes 514 and the common indoor gas tube 544 in operation S3, and the sensed temperature is stored as an initial temperature in the memory 164.

Then, an m^{th} high pressure valve of an n^{th} distributor is opened in operation S4. n and m denote a distributor number and a high pressure valve number, respectively, which are arbitrary numbers for conveniently describing sequential control of the distributors 20 and 30 and the high pressure valves 322 and 332, and an initial value of n and m is 1. A high pressure valve number is the same as a pipe port number of the pipe ports 41 to 44 of the distributors 20 and 30.

That is, when the tube search process starts, a first high pressure valve provided to a first pipe port of a first distributor is opened, and a first low pressure valve provided to the first pipe port is closed. Then, the refrigerant in a high pressure gas state is introduced to one or more indoor units connected to the first pipe port, and thus, the indoor units perform a heating operation.

As such, when control of the first high pressure valve and the first low pressure valve of the first pipe port is completed, the temperature sensor part 166 senses temperature of the indoor gas tubes 514 and the common indoor gas tubes 544 after a predetermined time.

Then, the control part 160 compares the measured temperature with the initial temperature stored in the memory 164 to search for a temperature-varied indoor unit. In this case, the temperature-varied indoor unit has a temperature higher than the initial temperature. Then, the temperature-varied indoor unit is matched with the m^{th} high pressure valve of the n^{th} distributor in operation S5.

Since one or more indoor units may be connected to one pipe port as described above, when temperature of gas tubes of indoor units is varied, the indoor units can be matched with one pipe port.

Next, in operation S6, the degree of opening of the indoor expansion mechanism (indoor expansion valve) of the searched-for indoor unit is decreased to prevent the searched-for indoor unit from being re-searched for. That is, the degree of opening of the indoor expansion mechanism of the searched-for indoor unit is adjusted to be equal to or less than a certain degree of opening. Then, an indoor unit including the indoor expansion mechanism having a degree of opening equal to or less than the certain degree of opening is not searched for by the control part 160.

For example, when the indoor expansion mechanism of an indoor unit has a degree of opening equal to or less than the certain degree of opening, gas tube temperature of the indoor unit may not be sensed by the temperature sensor part 166, or temperature sensed by the temperature sensor part 166 may not be compared with the initial temperature.

When the first pipe port is matched with a specific indoor unit, the first high pressure valve is closed, and the first low pressure valve is opened. Next, the second high pressure valve of a second pipe port is opened, and the second low pressure valve thereof is closed. That is, an m+1^{th} high pressure valve of the n^{th} distributor is opened. In operation S7, the control part 160 determines whether matching of all pipe ports of the n^{th} distributor is completed. Unless the matching of all pipe ports is completed, a process of matching a next pipe port with an indoor unit is performed in operation S8.

If the matching of all pipe ports of the n^{th} distributor is completed, each pipe port of an n+1^{th} distributor is matched with an indoor unit. In operation S9, it is determined whether matching of all pipe ports of a final distributor with indoor units is completed. Unless the matching of all pipe ports is completed, a process of matching pipe ports of a next distributor with indoor units is performed in operation S10.

If matching of all pipe ports of all distributors with indoor units is completed, matching data is stored in the memory 164, and matching data information may be displayed on the display part 162.

Although the tube search process is performed after all of the indoor units 51 to 57 perform the cooling operation in Fig. 7, a tube search process may be performed after all of the indoor units 51 to 57 perform a heating operation.

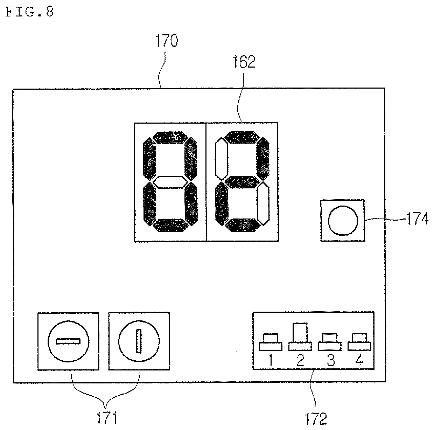

Fig. 8 is a schematic view illustrating a display part and an input part of an outdoor unit according to an embodiment.

Referring to Figs. 6 and 8, the input part 170 may include: one or more distributor switches 171 (distributor selector part ; one or more pipe port switches 172 (pipe port selector parts); and a selector part 174 for selecting a specific indoor unit as a main indoor unit from grouped indoor units.

The number of the distributor switches 171 may be equal to the number of the distributors 20 and 30 connected to the outdoor unit 10. The number of the pipe port switches 172 may be equal to the number of the pipe ports 41 to 44 provided to the distributors 20 and 30.

At least one of a rotary switch, a dual in-line package (DIP) switch, and an on/off push button switch may be used as the distributor switches 171 and the pipe port switches 172.

The display part 162 may display an indoor unit matched with a specific pipe port of a specific distributor.

For example, when a specific distributor and a specific pipe port are selected using the distributor switches 171 and the pipe port switches 172, information about an indoor unit matched with the specific pipe port of the specific distributor may be displayed on the display part 162. In this case, the information about the indoor unit may be a specific number stored in the indoor unit.

When a plurality of indoor units are matched with a specific pipe port of a specific distributor, information about the indoor units may be sequentially displayed at an interval of predetermined time. Then, a user checks the displayed information, and selects any one as a main indoor unit from the matched indoor units, that is, from grouped indoor units by means of the selector part 174. The selected main indoor unit may be replaced with another one by means of the selector part 174.

For example, in a state where a specific one among the grouped indoor units is displayed on the display part 162, when the selector part 174 is pressed, the specific indoor unit is determined as the main indoor unit. The others of the grouped indoor units are determined as sub indoor units.

For another example, information about the grouped indoor units may be simultaneously displayed on the display part 162. In this case, an indoor unit to be selected as the main indoor unit may be changed according to the number of pressing the selector part 174. In addition, when the selector part 174 is pressed continually for certain time, a corresponding indoor unit may be determined as the main indoor unit. After that, the main indoor unit and the sub indoor units may be separately displayed on the display part 162.

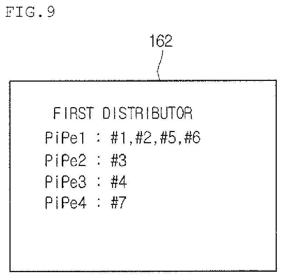

Fig. 9 is a schematic view illustrating a display part according to an embodiment.

Referring to Fig. 9, a display part 162 according to the current embodiment may simultaneously display information about indoor units matched with pipe ports of a specific distributor. For example, the display part 162 may display: first, second, fifth, and sixth indoor units are matched with a first pipe port; a third indoor unit is matched with a second pipe port; a fourth indoor unit is matched with a third pipe port; and a seventh indoor unit is matched with a fourth pipe port.

The display part 162 may be provided to an outdoor unit 10, or a distributor 20 or 30. Alternatively, display parts that are provided to respective indoor units 51 to 57 may display information about indoor units matched with pipe ports of a specific distributor.

Accordingly, since distributor information, pipe port information, and indoor unit information can be displayed together, a user can easily check indoor units corresponding to pipe ports.

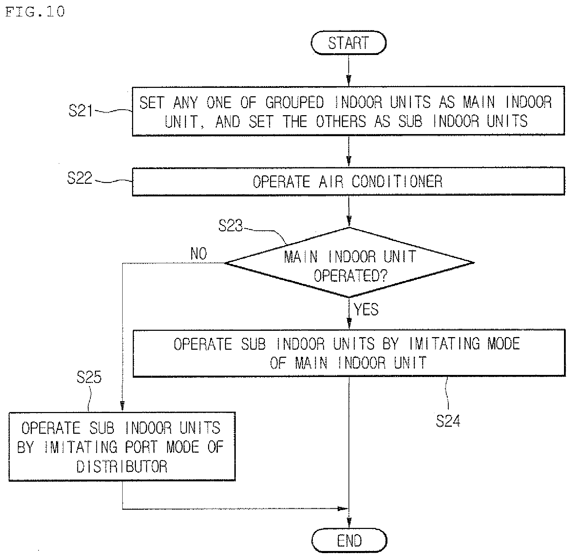

Fig. 10 is a flowchart illustrating a method of controlling a multi type air conditioner according to an embodiment.

A method of controlling grouped indoor units will now be described.

Referring to Fig. 10, after a tube search process is completed, any one of grouped indoor units is set as a main indoor unit in operation S21, and the others thereof are set as sub indoor units in operation S21. In operation S22, the multi type air conditioner may be operated according to an operation command. That is, an operation command for one or more of the grouped indoor units is input.

In operation S23, it is determined whether the main indoor unit is operated. In particular, when the main indoor unit starts to operate with the other indoor units stopped, a pipe port corresponding to the main indoor unit may be set to an operation mode of the main indoor unit. That is, when the main indoor unit is operated in a cooling mode, the pipe port corresponding to the main indoor unit may be set to a cooling mode. On the contrary, when the main indoor unit is operated in a heating mode, the pipe port corresponding to the main indoor unit may be set to a heating mode. Furthermore, when a mode of the main indoor unit is changed, the mode of the pipe port corresponding to the main indoor unit is also changed.

A mode of the pipe port denotes a control mode for a high pressure valve and a low pressure valve. That is, when the pipe port is in a cooling mode, the high pressure valve of the pipe port is closed, and the lower pressure valve thereof is opened. On the contrary, when the pipe port is in a heating mode, the high pressure valve of the pipe port is opened, and the lower pressure valve thereof is closed.

When the main indoor unit is operated, an operation mode of the sub indoor units imitates an operation mode of the main indoor unit in operation S24 That is, when the main indoor unit is in a cooling mode, even when a heating operation command for a specific sub indoor unit is input, the specific sub indoor unit is not operated in a heating mode and is operated in a cooling mode. In this case, the specific sub indoor unit may output information that the specific sub indoor unit is not operated in a heating mode and is operated in a cooling mode.

On the contrary, when the main indoor unit is not operated, an operation mode of the sub indoor units imitates a mode of the pipe port in operation S25 For example, when the main indoor unit is operated in a cooling mode, the pipe port is set to a cooling mode. Then, the main indoor unit may be stopped. After that, even when a heating operation command for a specific sub indoor unit is input, the specific sub indoor unit imitates the cooling mode of the pipe port, and thus, is not operated in a heating mode and is operated in a cooling mode. In this case, the specific sub indoor unit may output information that the specific sub indoor unit is not operated in a heating mode and is operated in a cooling mode.

That is, even though a specific operation command is input to a specific sub indoor unit, the specific sub indoor unit may not be operated according to the specific operation command, which may be notified.

Even when the grouped indoor units are all stopped, a previous mode of the pipe port may be maintained.

Alternatively, when the grouped indoor units are all stopped, a previous mode of the pipe port may be canceled. In this state, when a specific operation command (e.g., heating operation command) for a specific sub indoor unit is input, the specific sub indoor unit may be operated in a heating mode, and the pipe port may be set to a heating mode. Then, when a cooling operation command for a main indoor unit is input, the heating mode of the pipe port is changed to a cooling mode, and the sub indoor unit can be operated in a cooling mode.

Alternatively, regardless of a main indoor unit and sub indoor units, the grouped indoor units may be controlled to imitate a mode of the pipe port. The mode of the pipe port may be changed when all of the grouped indoor units are operated in the same mode. For example, when all of the grouped indoor units operated in a cooling mode with the pipe port set to a cooling mode are switched to a heating mode, the pipe port can also be switched to a heating mode. A mode of the pipe port may be cancelled when the grouped indoor units are stopped all. In this state, when one of the grouped indoor units is operated first, the pipe port may be set to a mode of the first-operated indoor unit.

Herein, an operation mode of the main indoor unit, or a mode of the pipe port may be referred to as a reference mode.

To sum up, when an operation command is input to at least one indoor unit of grouped indoor units (an indoor unit group), the indoor unit imitates a reference mode.

According to the embodiments, a plurality of indoor units can be connected to a pipe port of a distributor, and thus, additional distributors are unnecessary, thereby saving costs and working time for installing additional distributors.

In addition, an operation mode of grouped indoor units imitates a mode of a main indoor unit or a pipe port, and thus, the grouped indoor units are prevented from being operated differently. That is, the grouped indoor units are prevented from being operated in different modes.

Even though all the elements of the embodiments are coupled into one or operated in the combined state, the present, disclosure is not limited to such an embodiment. That is, all the elements may be selectively combined with each other without departing the scope of the invention as defined by the appended claims. Furthermore, when it is described that one comprises (or includes or has) some elements, it should be understood that it may comprise (or include or has) only those elements, or it may comprise (or include or have) other elements as well as those elements if there is no specific limitation. Unless otherwise specifically defined herein, all terms including technical or scientific terms are to be given meanings understood by those skilled in the art. Like terms defined in dictionaries, generally used terms needs to be construed as meaning used in technical contexts and are not construed as ideal or excessively formal meanings unless otherwise clearly defined herein.

Although embodiments have been described with reference to a number of illustrative embodiments thereof, it will be understood by those skilled in the art that various changes in form and details may be made therein without departing from the scope of the invention as defined by the appended claims. Therefore, the preferred embodiments should be considered in descriptive sense only and not for purposes of limitation, and also the technical scope of the invention is not limited to the embodiments. Furthermore, is defined not by the detailed description of the invention but by the appended claims, and all differences within the scope will be construed as being comprised in the present disclosure.

## Claims

1. A method of controlling a multi type air conditioner comprising: an outdoor unit; a distributor connected to the outdoor unit and comprising pipe ports; and a plurality of indoor units connected to the distributor, **characterised in that** two or more of the indoor units are connected to one or more of the pipe ports to constitute an indoor unit group of each pipe port, the method comprising:
inputting an operation command to one or more of the indoor units constituting the indoor unit group;
checking a reference mode of the indoor unit group; and
imitating the reference mode to operate the one or more indoor units.

2. The method according to claim 1, wherein the indoor unit group comprises a main indoor unit and one or more sub indoor units,
the reference mode is an operation mode of the main indoor unit, and
an operation mode of the one or more sub indoor units imitates the operation mode of the main indoor unit.

3. The method according to claim 2, further comprising a selector part for selecting the main indoor unit from the indoor units constituting the indoor unit group,
wherein the selector part is provided to the distributor or the outdoor unit.

4. The method according to claim 2, wherein a mode of the pipe port to which the indoor unit group is connected is set to correspond to the operation mode of the main indoor unit, and
when the main indoor unit is stopped, the reference mode is set to the mode of the pipe port, and
the operation mode of the sub indoor unit imitates the mode of the pipe port.

5. The method according to claim 2, wherein when a mode of the pipe port is set, even though the indoor units constituting the indoor unit group are stopped all, the reference mode is set to the mode of the pipe port.

6. The method according to claim 2, wherein when a mode of the pipe port is set, even though the indoor units constituting the indoor unit group are stopped all, the mode of the pipe port is cancelled.

7. The method according to claim 6, wherein when the mode of the pipe port is cancelled, the pipe port is set to a mode of a first-operated indoor unit of the indoor unit group.

8. The method according to claim 1, wherein the reference mode is a mode of the pipe port to which the two or more indoor units constituting the indoor unit group are connected;
when the indoor units constituting the indoor unit group are operated all in a specific mode, the mode of the pipe port is set to the specific mode; and
when the two or more indoor units constituting the indoor unit group are stopped all, the mode of the pipe port is cancelled.

9. The method according to claim 1, wherein when an operation mode input to one or more of the indoor units constituting the indoor unit group is different from the reference mode, information is output to an outside of the one or more indoor units to notify that the one or more indoor units are not operated in the input operation mode.

10. The method according to any of claims 1 to 9, wherein the indoor unit connected to each pipe port of the distributor is searched for using a tube search method,
information that each pipe port is matched with the indoor unit is stored in a memory, and
the two or more indoor units constituting the indoor unit group connected to a specific pipe port are displayed simultaneously or sequentially on a display part.

11. The method according to claim 10, wherein the display part displays distributor information, pipe port information, and indoor unit information together.

12. The method according to claim 10 or 11, wherein the distributor is provided in plurality,
the display part displays indoor unit information corresponding to a specific pipe port of a specific one of the distributors,
information about an indoor unit connected to a specific pipe port of each distributor is stored in the memory,
a distributor selector part selects the specific distributor from the distributors, and
a pipe port selector part selects the specific pipe port of the specific distributor.

13. The method according to claim 10, wherein the tube search method comprises:
searching for an indoor unit connected to a specific pipe port, among the indoor units;
matching the searched-for indoor unit with the specific pipe port; and
adjusting a degree of opening of an indoor expansion mechanism of the searched-for indoor unit.

14. The method according to claim 13, wherein in the searching for the indoor unit, a degree of opening of an indoor expansion mechanism of each indoor unit is in a full open state, and
the degree of opening of the indoor expansion mechanism of the searched-for indoor unit is adjusted to be a certain value or less .

15. A multi type air conditioner comprising: an outdoor unit; a distributor connected to the outdoor unit and comprising pipe ports; and a plurality of indoor units connected to the distributor, **characterised in that** two or more of the indoor units are connected to one or more of the pipe ports to constitute an indoor unit group of each pipe port being configured to operate according to a method of any of claims 1 to 14.

## Patentansprüche

1. Verfahren zum Steuern einer Multityp-Klimaanlage, die aufweist: eine Außeneinheit; einen Verteiler, der mit der Außeneinheit verbunden ist und Leitungsanschlüsse aufweist; und mehrere Inneneinheiten, die mit dem Verteiler verbunden sind, **dadurch gekennzeichnet, dass** zwei oder mehrere der Inneneinheiten mit einem oder mehreren der Leitungsanschlüsse verbunden sind, um an jedem Leitungsanschluss eine Inneneinheitsgruppe zu bilden, wobei das Verfahren aufweist:
Eingeben eines Betriebsbefehls in eine oder mehrere der Inneneinheiten, die die Inneneinheitsgruppe bilden;
Prüfen eines Bezugsmodus der Inneneinheitsgruppe; und
Nachahmen des Bezugsmodus, um die eine oder die mehreren Inneneinheiten zu betreiben.

2. Verfahren nach Anspruch 1, wobei die Inneneinheitsgruppe eine Hauptinneneinheit und eine oder mehrere Nebeninneneinheiten aufweist,
der Bezugsmodus eine Betriebsart der Hauptinneneinheit ist, und
eine Betriebsart der einen oder mehreren Nebeninneneinheiten die Betriebsart der Hauptinneneinheit nachahmt.

3. Verfahren nach Anspruch 2, das ferner einen Auswahlteil zum Auswählen der Hauptinneneinheit aus den Inneneinheiten aufweist, die die Inneneinheitsgruppe bilden,
wobei der Auswahlteil am Verteiler oder an der Außeneinheit vorgesehen ist.

4. Verfahren nach Anspruch 2, wobei ein Modus des Leitungsanschlusses, mit dem die Inneneinheitsgruppe verbunden ist, so eingestellt wird, dass er der Betriebsart der Hauptinneneinheit entspricht, und
wenn die Hauptinneneinheit gestoppt ist, der Bezugsmodus auf den Modus des Leitungsanschlusses eingestellt wird, und
die Betriebsart der Nebeninneneinheit den Modus des Leitungsanschlusses nachahmt.

5. Verfahren nach Anspruch 2, wobei wenn ein Modus des Leitungsanschlusses eingestellt wird, obwohl die Inneneinheiten, die die Inneneinheitsgruppe bilden, alle gestoppt sind, der Bezugsmodus auf den Modus des Leitungsanschlusses eingestellt wird.

6. Verfahren nach Anspruch 2, wobei wenn ein Modus des Leitungsanschlusses eingestellt wird, obwohl die Inneneinheiten, die die Inneneinheitsgruppe bilden, alle gestoppt sind, der Modus des Leitungsanschlusses aufgehoben wird.

7. Verfahren nach Anspruch 6, wobei wenn der Modus des Leitungsanschlusses aufgehoben wird, der Leitungsanschluss auf einen Modus einer zuerst betriebenen Inneneinheit der Inneneinheitsgruppe eingestellt wird.

8. Verfahren nach Anspruch 1, wobei der Bezugsmodus ein Modus des Leitungsanschlusses ist, mit dem die zwei oder die mehreren Inneneinheiten verbunden sind, die die Inneneinheitsgruppe bilden;
wenn die Inneneinheiten, die die Inneneinheitsgruppe bilden, alle in einem spezifischen Modus betrieben werden, der Modus des Leitungsanschlusses auf den spezifischen Modus eingestellt wird; und
wenn die zwei oder mehreren Inneneinheiten, die die Inneneinheitsgruppe bilden, alle gestoppt sind, der Modus des Leitungsanschlusses aufgehoben wird.

9. Verfahren nach Anspruch 1, wobei wenn eine Betriebsart, die in eine oder mehrere der Inneneinheiten, die die Inneneinheitsgruppe bilden, eingegeben wird, sich vom Bezugsmodus unterscheidet, Informationen über die eine oder die mehreren Inneneinheiten nach außen ausgegeben werden, um mitzuteilen, dass die eine oder die mehreren Inneneinheiten nicht in der eingegebenen Betriebsart betrieben werden.

10. Verfahren nach einem der Ansprüche 1 bis 9, wobei mittels eines Leitungssuchverfahrens nach der Inneneinheit gesucht wird, die mit jedem Leitungsanschluss des Verteilers verbunden ist,
Informationen, dass jeder Leitungsanschluss mit der Inneneinheit abgeglichen ist, in einem Speicher gespeichert werden, und
die zwei oder die mehreren Inneneinheiten, die die Inneneinheitsgruppe bilden, die mit einem spezifischen Leitungsanschluss verbunden ist, gleichzeitig oder sequentiell auf einem Anzeigeteil angezeigt werden.

11. Verfahren nach Anspruch 10, wobei der Anzeigeteil Verteilerinformationen, Leitungsanschlussinformationen und Inneneinheitsinformationen zusammen anzeigt.

12. Verfahren nach Anspruch 10 oder 11, wobei der Verteiler mehrfach vorgesehen ist, der Anzeigeteil Inneneinheitsinformationen anzeigt, die einem spezifischen Leitungsanschluss von einem spezifischen der Verteiler entsprechen,
Informationen über eine Inneneinheit, die mit einem spezifischen Leitungsanschluss jedes Verteilers verbunden ist, im Speicher gespeichert werden,
ein Verteilerauswahlteil den spezifischen Verteiler aus den Verteilern auswählt, und ein Leitungsanschlussauswahlteil den spezifischen Leitungsanschluss des spezifischen Verteilers auswählt.

13. Verfahren nach Anspruch 10, wobei das Leitungssuchverfahren aufweist:
Suchen nach einer Inneneinheit, die mit einem spezifischen Leitungsanschluss verbunden ist, unter den Inneneinheiten;
Abgleichen der gesuchten Inneneinheit mit dem spezifischen Leitungsanschluss; und
Einstellen eines Öffnungsgrads eines Innenexpansionsmechanismus der gesuchten Inneneinheit.

14. Verfahren nach Anspruch 13, wobei beim Suchen nach der Inneneinheit sich ein Öffnungsgrad eines Innenexpansionsmechanismus jeder Inneneinheit in einem vollständig geöffneten Zustand befindet, und
der Öffnungsgrad des Innenexpansionsmechanismus der gesuchten Inneneinheit so eingestellt wird, dass er einen bestimmten Wert oder weniger aufweist.

15. Multityp-Klimaanlage, die aufweist: eine Außeneinheit; einen Verteiler, der mit der Außeneinheit verbunden ist und Leitungsanschlüsse aufweist; und mehrere Inneneinheiten, die mit dem Verteiler verbunden sind, **dadurch gekennzeichnet, dass**
zwei oder mehrere der Inneneinheiten mit einem oder mehreren der Leitungsanschlüsse verbunden sind, um eine Inneneinheitsgruppe von jedem Leitungsanschluss zu bilden, die konfiguriert ist, gemäß einem Verfahren nach einem der Ansprüche 1 bis 14 zu arbeiten.

## Revendications

1. Procédé de commande d'un climatiseur multiblocs comprenant : une unité extérieure ;
un distributeur relié à l'unité extérieure et comprenant des sorties de conduite ; et une pluralité d'unités intérieures raccordées au distributeur, **caractérisé en ce qu'**au moins deux unités intérieures sont raccordées à une ou à plusieurs sorties de conduite pour constituer un groupe d'unités intérieures pour chaque sortie de conduite, ledit procédé comprenant :
l'entrée d'une commande de fonctionnement pour une ou plusieurs des unités intérieures constituant le groupe d'unités intérieures ;
le contrôle d'un mode de référence du groupe d'unités intérieures ; et
l'imitation du mode de référence pour activer l'unité ou les unités intérieures.

2. Procédé selon la revendication 1, où le groupe d'unités intérieures comprend une unité intérieure principale et une ou plusieurs unités intérieures secondaires,
le mode de référence est un mode de fonctionnement de l'unité intérieure principale, et un mode de fonctionnement de l'unité ou des unités intérieures secondaires imite le mode de fonctionnement de l'unité intérieure principale.

3. Procédé selon la revendication 2, comprenant en outre une section de sélecteur pour la sélection de l'unité intérieure principale parmi les unités intérieures constituant le groupe d'unités intérieures,
la section de sélecteur étant prévue sur le distributeur ou l'unité extérieure.

4. Procédé selon la revendication 2, où un mode de la sortie de conduite à laquelle le groupe d'unités intérieures est raccordé est réglé pour correspondre au mode de fonctionnement de l'unité intérieure principale, et où,
si l'unité intérieure principale est mise à l'arrêt, le mode de référence est réglé sur le mode de la sortie de conduite, et
le mode de fonctionnement de l'unité intérieure secondaire imite le mode de la sortie de conduite.

5. Procédé selon la revendication 2, où, si un mode de la sortie de conduite est réglé, le mode de référence est réglé sur le mode de la sortie de conduite même si les unités intérieures constituant le groupe d'unités intérieures sont toutes mises à l'arrêt.

6. Procédé selon la revendication 2, où, si un mode de la sortie de conduite est réglé, le mode de la sortie de conduite est annulé même si les unités intérieures constituant le groupe d'unités intérieures sont toutes mises à l'arrêt.

7. Procédé selon la revendication 6, où, si le mode de la sortie de conduite est annulé, la sortie de conduite est réglée sur un mode d'une première unité intérieure activée du groupe d'unités intérieures.

8. Procédé selon la revendication 1, où, si le mode de référence est un mode de la sortie de conduite à laquelle les au moins deux unités intérieures constituant le groupe d'unités intérieures sont raccordées ;
si les unités intérieures constituant le groupe d'unités intérieures sont toutes activées dans un mode spécifique, le mode de la sortie de conduite est réglé sur le mode spécifique ; et
si les au moins deux unités intérieures constituant le groupe d'unités intérieures sont toutes mises à l'arrêt, le mode de la sortie de conduite est annulé.

9. Procédé selon la revendication 1, où, si une entrée de mode de fonctionnement pour une ou plusieurs des unités intérieures constituant le groupe d'unités intérieures diffère du mode de référence, une information est émise vers l'extérieur de l'unité ou des unités intérieures pour notifier que l'unité ou les unités intérieures ne sont pas activées dans le mode de fonctionnement entré.

10. Procédé selon l'une des revendications 1 à 9, où l'unité intérieure raccordée à chaque sortie de conduite du distributeur est recherchée pour appliquer un procédé de recherche de tuyau,
une information que chaque sortie de conduite est mise en correspondance avec l'unité intérieure est stockée dans une mémoire, et
les au moins deux unités intérieures constituant le groupe d'unités intérieures raccordées à une sortie de conduite spécifique sont affichées simultanément ou séquentiellement sur une section d'affichage.

11. Procédé selon la revendication 10, où la section d'affichage affiche conjointement une information de distributeur, une information de sortie de conduite et une information d'unité intérieure.

12. Procédé selon la revendication 10 ou la revendication 11, où le distributeur est prévu en pluralité,
la section d'affichage affiche une information d'unité intérieure correspondant à une sortie de conduite spécifique d'un distributeur spécifique,
une information sur une unité intérieure raccordée à une sortie de conduite spécifique de chaque distributeur est stockée en mémoire,
une section de sélection de distributeur sélectionne le distributeur spécifique parmi les distributeurs, et
une section de sélection de sortie de conduite sélectionne la sortie de conduite spécifique du distributeur spécifique.

13. Procédé selon la revendication 10, où le procédé de recherche de tuyau comprend :
la recherche d'une unité intérieure raccordée à une sortie de conduite spécifique parmi les unités intérieures ;
la mise en correspondance de l'unité intérieure recherchée avec la sortie de conduite spécifique ; et
le réglage d'un degré d'ouverture d'un mécanisme de détente intérieure de l'unité intérieure recherchée.

14. Procédé selon la revendication 13, où, lors de la recherche d'unité intérieure, un degré d'ouverture d'un mécanisme de détente intérieure de chaque unité intérieure est en état d'ouverture complète, et
le degré d'ouverture du mécanisme de détente intérieure de l'unité intérieure recherchée est réglé à une valeur définie ou à moins.

15. Climatiseur multiblocs comprenant : une unité extérieure ; un distributeur relié à l'unité extérieure et comprenant des sorties de conduite ; et une pluralité d'unités intérieures raccordées au distributeur, **caractérisé en ce qu'**au moins deux unités intérieures sont raccordées à une ou à plusieurs sorties de conduite pour constituer un groupe d'unités intérieures pour chaque sortie de conduite, prévu pour fonctionner conformément au procédé selon l'une des revendications 1 à 14.
